Europäisches Patentamt

European Patent Office

Office européen des brevets

(19)

(11) Veröffentlichungsnummer: **0 023 615**
**B1**

(12) **EUROPÄISCHE PATENTSCHRIFT**

(45) Veröffentlichungstag der Patentschrift: **16.11.83**

(51) Int. Cl.³: **C 01 F 7/56**

(21) Anmeldenummer: **80104052.8**

(22) Anmeldetag: **12.07.80**

(54) Vorrichtung zum Verdampfen von Aluminiumtrichlorid.

(30) Priorität: **17.07.79 DE 2928805**

(43) Veröffentlichungstag der Anmeldung:
**11.02.81 Patentblatt 81/6**

(45) Bekanntmachung des Hinweises auf die Patenterteilung:
**16.11.83 Patentblatt 83/46**

(84) Benannte Vertragsstaaten:
**AT BE CH DE FR GB IT LI LU NL SE**

(56) Entgegenhaltungen:
**AT - B - 261 236**
**DE - A - 1 458 301**
**DE - A - 2 705 556**
**US - A - 3 524 730**

**FIRMENSCHRIFT: AMK AACHENER MISCH- U.**
**KNETMASCHINENFABRIK P. KÜPPER, 1961,**
**"Mischmaschine für verschiedene**
**Verwendungszwecke" und "Mischmaschine**
**Bauart VIH"**

(73) Patentinhaber: **Degussa Aktiengesellschaft**
**Weissfrauenstrasse 9**
**D-6000 Frankfurt am Main 1 (DE)**

(72) Erfinder: **Aichelmann, Dietmar**
**Herm.-Steinegger-Strasse 22**
**D-7888 Rheinfelden (DE)**
Erfinder: **Kannenberg, Karl, Dr.**
**Friedr.-Ebert-Strasse 8**
**D-7888 Rheinfelden (DE)**
Erfinder: **Schutte, Dieter, Dr.**
**Ernst-Reuter-Strasse 16**
**D-7888 Rheinfelden (DE)**
Erfinder: **Völling, Axel, Dr.**
**Stettiner Strasse 2**
**D-5040 Brühl (DE)**

(56) Entgegenhaltungen:
**ALUMINIUM, Band 46, 1970, E. HERMANN**
**"Aluminiumgewinnung nach dem**
**Subchloridverfahren" Seiten 700 bis 707 und**
**764 bis 771**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zum Verdampfen von Aluminiumtrichlorid

Die Erfindung betrifft eine Vorrichtung zum Verdampfen von Aluminiumtrichlorid.

Aluminiumtrichlorid wird im dampfförmigen Zustand als Ausgangsstoff zur pyrogenen Herstellung von Aluminiumoxid verwendet.

Die Verdampfung und die gleichmäßige Verteilung des Aluminiumtrichlorides in einem Traggas, wie zum Beispiel in Wasserstoff, ist äußerst schwierig und problematisch, da Aluminiumtrichlorid ohne Übergang über die flüssige Phase direkt aus der festen in die dampfförmige Phase sublimiert.

Zur besseren Kontrolle des Verdampfungsvorganges vermischt man nun das Aluminiumtrichlorid mit Alkalichlorid. Aus diesem Gemisch bildet sich eine flüssige ternäre Schmelze, aus der das Aluminiumtrichlorid verdampft.

Es ist bekannt, Aluminiumtrichlorid zu verdampfen, indem man ein Gemisch aus Aluminiumtrichlorid und Alkalichlorid durch Durchleiten von elektrischem Strom erhitzt. (OE—A—261 236 und DE—A—14 58 301).

Ebenso sind Mischmaschinen bekannt, die aus einem U-förmigen Trog mit flachen Stirnwänden bestehen und mit Mischflügeln ausgerüstet sind, die dem Mischgut angepaßt sind.

Gegenstand der Erfindung ist eine Vorrichtung zum Verdampfen von Aluminiumtrichlorid, die aus einem U-förmigen Trog mit flachen Stirnflächen (2) besteht, bei welchem in dem Mittelpunkt der Rundung der Stirnfläche ein parallel zu der waagerechten Längsachse des Troges ausgerichteter Wendelrührer (5) mit zu gleichen Teilen gegenläufigen Gängen angeordnet ist, dadurch gekennzeichnet, daß

1) an der Rundung parallel zu der waagerechten Längsachse des Troges außen oder in der Wand mindestens zwei Heizstäbe (6) über die ganze Länge des Troges angeordnet sind,

2) an dem einen Ende an der tiefsten Stelle der Rundung eine Vorrichtung (8) für das Ablassen des Schmelzgutes angeordnet ist,

3) eine auf der Oberseite des Troges starr befestigte, dichte Abdeckung durch die Zuleitung (13) und die Leitung (15) durchbrochen wird.

Die Vorteile der erfindungsgemäßen Vorrichtung sind vorallem in den folgenden Punkten zu sehen:

Aufgrund der erfindungsgemäßen Anordnung der Heizstäbe (Silit) parallel zu der waagerechten Längsachse des U-förmigen Troges ist es möglich, die Heizstabtemperatur bis auf 1.400°C zu erhöhen.

Die erfindungsgemäße Anordnung des Wendelrührers ermöglicht eine gute Durchmischung des Schmelzgutes und verhindert die Bildung von unerwünschten Ablagerungen auf der Innenwand des U-förmigen Troges.

Die erfindungsgemäße Vorrichtung kann beliebig in seinen Dimensionen den Kapazitätsanforderungen angepaßt werden.

Die erfindungsgemäße Vorrichtung wird anhand der Zeichnung näher erläutert und beschrieben:

Es zeigen

Figur 1 die schematische Darstellung der erfindungsgemäßen Vorrichtung im Längsschnitt und

Figur 2 die schematische Darstellung der erfindungsgemäßen Vorrichtung im Querschnitt.

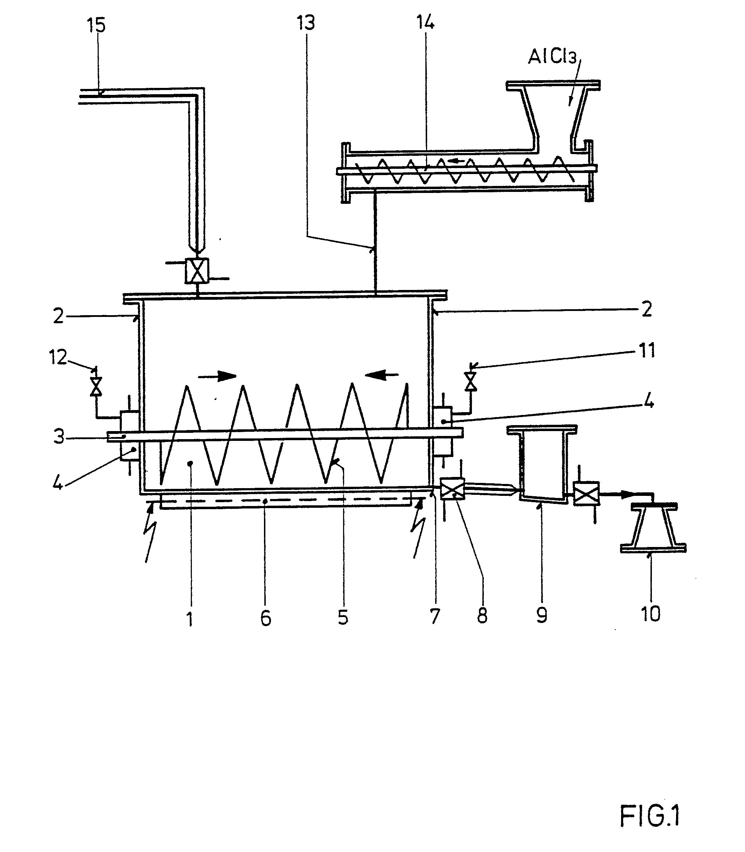

Gemäß der Figur 1 ist bei dem U-förmigen Trog in dem Mittelpunkt der Rundungen der Stirnflächen 2 eine Welle 3 in den Lagerungen 4 drehbar angeordnet. Auf dieser Welle 3 ist ein Wendelrührer 5 mit zu gleichen Teilen gegenläufigen Gängen angeordnet.

An der Rundung des U-förmigen Troges 1 sind parallel zu der waagerechten Längsachse des Troges 1 Heizstäbe 6 über die ganze Länge des Troges angeordnet.

An der tiefsten Stelle der Rundung 7 ist eine Auslaßvorrichtung 8 für das Schmelzgut angeordnet. An dieser Auslaßvorrichtung 8 sind das Ausgleichsgefäß 9 und das Auffangsgefäß 10 angeschlossen.

Über die Zuleitungen 11 und 12 wird die Lagerung 4 der Welle 3 mit Stickstoff beaufschlagt, um ein Austreten des Schmelzgutes durch die Lagerung 4 zu vermeiden.

Über die Zuleitung 13 wird das feste Aluminiumtrichlorid/Alkalichloridgemisch mittels der Förderschnecke 14 in den U-förmigen Trog 1 eingeführt.

Über die Leitung 15 wird das dampfförmige Aluminiumtrichlorid zu der Vorrichtung zur pyrogenen Herstellung von Aluminiumoxid geführt.

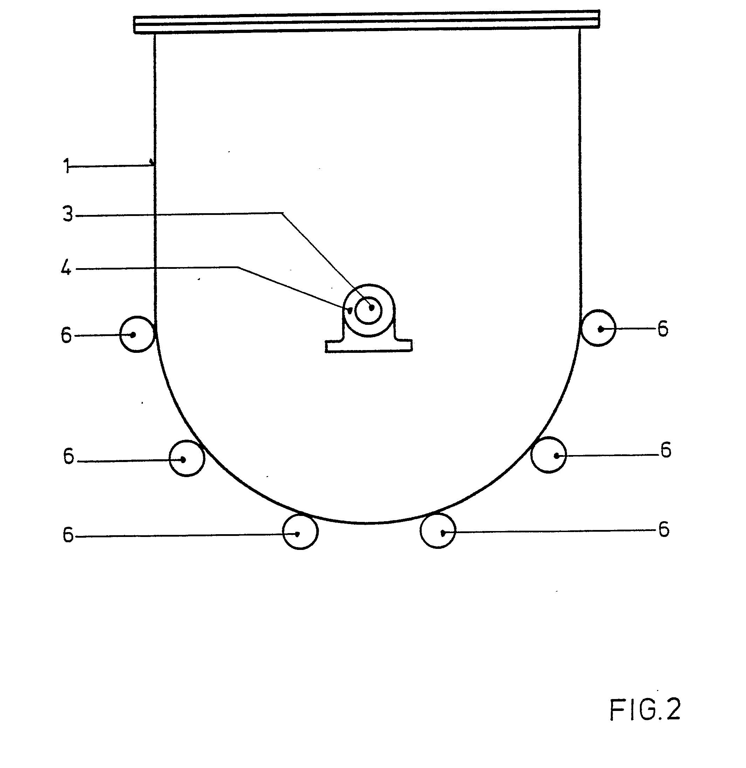

Gemäß der Figur 2 sind an der Rundung des U-förmigen Troges 1 sechs Heizstäbe 6 parallel zu der waagerechten Längsachse des U-förmigen Troges 1 angeordnet.

In dem Mittelpunkt der Rundung der Stirnfläche 2 des U-förmigen Troges 1 ist die Lagerung 4 für die Welle 3 angeordnet.

**Patentanspruch**

Vorrichtung zum Verdampfen von Aluminiumtrichlorid, die aus einem U-förmigen Trog mit flachen Stirnflächen (2) besteht, bei welchem in dem Mittelpunkt der Rundung der Stirnfläche ein parallel zu der waagerechten Längsachse des Troges ausgerichteter Wendelrührer (5) mit zu gleichen Teilen gegenläufigen Gängen angeordnet ist, dadurch gekennzeichnet, daß

1) an der Rundung parallel zu der waagerechten Längsachse des Troges außen oder in der Wand mindestens zwei Heizstäbe (6) über die ganze Länge des Troges angeordnet sind,

2) an dem einen Ende an der tiefsten Stelle der Rundung eine Vorrichtung (8) für das Ablassen des Schmelzgutes angeordnet ist,

3) eine auf der Oberseite des Troges starr befestigte, dichte Abdeckung durch die Zuleitung (13) und die Leitung (15) durchbrochen wird.

## Revendication

Appareil pour vaporiser du trichlorure d'aluminium, qui est constitué d'une auge en forme de U à surfaces frontales (2) planes, dans lequel est disposé, au point central de l'arrondi des surfaces frontales, un agitateur hélicoïdal (5) dirigé parallèlement à l'axe longitudinal horizontal de l'auge comportant des spires à mouvements opposés par parties égales, appareil caractérisé en ce que:

1. sur l'arrondi, parallèlement à l'axe longitudinal horizontal de l'auge, en dehors ou dans la paroi, au moins deux résistances chauffantes (6) à gaines sont disposées sur toute la longueur de l'auge,

2. A une des extrémités, au point le plus bas de l'arrondi, il est placé un dispositif (8) destiné à l'évacuation de la matière en fusion,

3. un couvercle étanche fixé rigidement sur la face supérieure de l'auge est traversé par la conduite d'arrivée (13) et la conduite (15).

## Claim

An apparatus for the evaporation of aluminium trichloride which comprises a U-shaped trough having flat faces (2), in which trough a helical stirrer (5) which is oriented parallel to the horizontal longitudinal axis of the trough and which has equal opposite pitches is positioned in the centre of the curvature of the face, characterised in that

1) at least two heating rods (6) are positioned over the complete length of the trough outside or in the wall on the curvature parallel to the horizontal longitudinal axis of the trough,

2) an apparatus (8) for drawing off the molten material is positioned at one end at the lowest point of the curvature,

3) a tight cover which is rigidly attached to the top of the trough is pierced by the supply line (13) and the line (15).

FIG.1

FIG.2